# FASCICULE DE BREVET EUROPEEN

(11) **EP 1 279 244 B1**
(45) Date de publication et mention de la délivrance du brevet: **12.11.2003**
(21) Numéro de dépôt: 01928005.6
(22) Date de dépôt: 19.04.2001
(51) Int. Cl.: H04B 10/155

(54) **DISPOSITIF POUR L'EMISSION DE SIGNAUX OPTIQUES A UN FORMAT RZ, NOTAMMENT DE SIGNAUX OPTIQUES A IMPULSIONS SOLITONS**
VORRICHTUNG ZUM SENDEN VON OPTISCHEN SIGNALEN MIT RZ-FORMAT, INSBESONDERE VON OPTISCHEN SOLITONIMPULSSIGNALEN
DEVICE FOR TRANSMITTING OPTICAL RZ SIGNALS, IN PARTICULAR SOLITON-PULSE SIGNALS

(30) Priorité: 19.04.2000 FR 0005035
(43) Date de publication de la demande: 29.01.2003
(73) Titulaire: Corvis Algety, 22300 Lannion (FR)
(72) Inventeur: GEORGES, Thierry, F-22700 Perros-Guirec (FR)
(74) Mandataire: Callon de Lamarck, Jean-Robert
(86) Numéro de dépôt international: FR0101206
(87) Numéro de publication internationale: WO01080464

(56) Documents cités:
- EP-A- 0 622 916
- EP-A- 0 658 015
- US-A- 5 857 040
- US-A- 5 946 119

## Description

La présente invention est relative à un dispositif pour l'émission de signaux optiques à un format RZ, notamment de signaux optiques à impulsions solitons.

Elle trouve en particulier avantageusement application dans le cas de systèmes destinés à des applications terrestres, c'est à dire destinés à assurer des transmissions sur des distances inférieures à 4 000 kms.

Les émetteurs de données au format solitons sont souvent réalisés de l'une des manières suivantes :
- Un laser continu suivi d'un modulateur d'intensité électro-optique alimenté par des données électriques au format NRZ suivi d'un modulateur d'intensité ou de phase électro-optique alimenté par une horloge.
- Un laser continu suivi d'un modulateur d'intensité électro-optique alimenté par des données électriques au format RZ.
- Un laser modulé directement par une horloge suivi d'un modulateur d'intensité électro-optique alimenté par des données électriques au format NRZ.
- Un laser modulé directement par des données au format NRZ suivi d'un modulateur d'intensité électro-optique alimenté par une horloge.

Un tel dispositif d'émission de signaux soliton est décrit dans EP-A-622916 (ATαT).

L'inconvénient de la première technique est d'utiliser un modulateur supplémentaire.

L'inconvénient de la seconde est de produire des impulsions longues (typiquement supérieures à la moitié du temps bit), sauf à utiliser une électronique HF dont la bande est beaucoup plus large que le débit.

Les troisième et quatrième méthodes donnent, notamment dans le cas de lasers à semi-conducteur, un signal de très mauvaise qualité dès que l'on cherche à réaliser des débits supérieurs à 5 Gbit/s. Ceci est en particulier dû au couplage amplitude/phase dans le laser.

Un but de l'invention est de réaliser un dispositif d'émission qui ne présente pas les inconvénients des techniques antérieures.

A cet effet l'invention propose un dispositif d'émission de signaux optiques au format RZ comportant une source pour l'émission d'un signal optique cohérent et des moyens pour la modulation de ce signal optique, caractérisé en ce que ces moyens de modulation consistent en un modulateur d'amplitude et en ce que des moyens commandent ledit modulateur et/ou le laser de façon à ce qu'il(s) réalise(nt) simultanément une modulation d'amplitude et une modulation de phase synchrone.

Dans une variante de réalisation avantageuse, lesdits moyens de commande mettent en oeuvre une modulation de l'intensité de commande du laser.

Dans une variante préférée, le modulateur est un modulateur de type Mach-Zender et les moyens de commande ne modulent qu'une seule des branches dudit modulateur de type Mach-Zender.

L'invention propose également un système de transmission optique comportant des moyens d'émission, une ligne de transmission à fibre(s) optique(s), des moyens de réception, caractérisé en ce que les moyens d'émission sont des moyens du type précité.

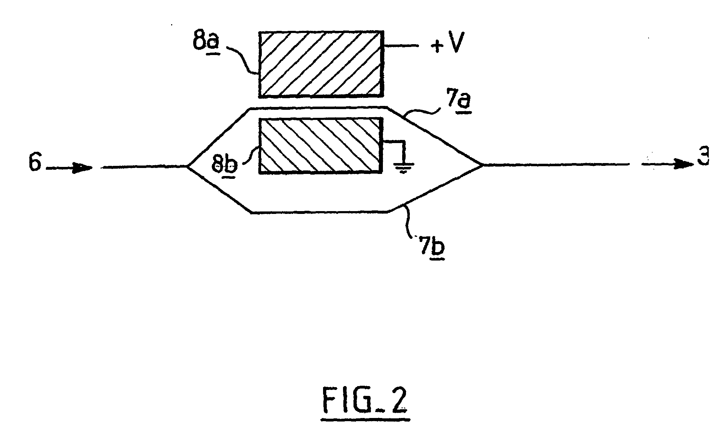

D'autres caractéristiques et avantages de l'invention ressortiront encore de la description qui suit, laquelle est purement illustrative et non limitative et doit être lue en regard des dessins annexés sur lesquels :

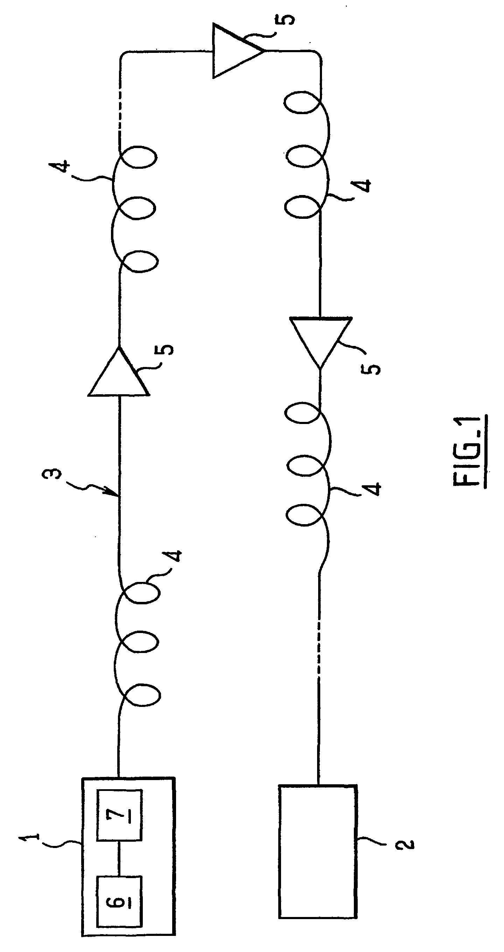

- la figure 1 représente schématiquement un système de transmission optique sur lequel un procédé conforme à l'invention peut être mis en oeuvre ;
- le figure 2 illustre schématiquement un exemple de modulateur utilisé dans un mode de réalisation possible de l'invention.

Le système de transmission représenté sur cette figure comporte des moyens émetteurs 1, des moyens récepteurs 2 et une ligne de transmission 3 qui est par exemple une ligne de transmission terrestre et qui s'étend entre lesdits moyens émetteurs et récepteurs 1 et 2.

Les moyens émetteurs 1 et les moyens récepteurs 2 comportent par exemple des moyens de multiplexage/démultiplexage qui permettent de transmettre simultanément sur la ligne 3 plusieurs canaux correspondant à différentes longueurs d'onde de transmission.

La ligne 3 comporte quant à elle plusieurs sections 4 de fibre optique entre lesquelles sont interposés des amplificateurs 5.

Les moyens émetteurs 1 vont maintenant plus particulièrement être décrits.

Ces moyens émetteurs sont des moyens qui permettent la génération de signaux à impulsions RZ et notamment de signaux à impulsions solitons.

Ils comportent un laser 6 suivi d'un modulateur d'intensité électro-optique 7 qui intègre un moyen permettant d'appliquer une modulation de phase synchrone.

Ce modulateur 7 est alimenté par des données électriques au format RZ.

La bande passante de l'électronique HF est préférentiellement choisie étroite (de l'ordre du débit).

Plusieurs solutions sont envisageables pour l'application d'une modulation de phase synchrone.

Une première variante consiste à réaliser directement une légère modulation de l'intensité de commande du laser. Grâce au couplage amplitude/phase dans le semi-conducteur, ceci induit une modulation de phase synchrone (le modulation d'intensité est en effet synchrone avec la modulation des données).

Une autre variante consiste à utiliser comme modulateur d'amplitude un modulateur de type Mach-Zehnder dont on ne module, ainsi qu'illustré sur la figure 2, qu'une seule branche.

Sur la figure 2, les deux branches du modulateur ont été référencées par 7a et 7b, les deux électrodes permettant de moduler par effet électro-optique le signal se propageant sur la branche 7a ayant été référencées par 8a, 8b.

Que l'on utilise l'une ou l'autre de ces deux variantes, la modulation de phase synchrone, associée à la dispersion chromatique de la fibre de ligne, permet de réduire la durée des impulsions.

L'avantage de la première variante est un réglage de la durée de l'impulsion par la variation de l'amplitude de modulation du laser.

L'avantage de la seconde variante est son faible coût.

Les dispositifs qui viennent d'être décrits permettent de réaliser l'émission de signaux au format solitons, avec des impulsions dont la durée peut varier entre 30% et 55% du temps bit.

Cette durée est particulièrement adaptée à la transmission de données sur des liaisons terrestres.

## Revendications

1. Dispositif d'émission de signaux optiques au format RZ comportant une source pour l'émission d'un signal optique cohérent et des moyens pour la modulation de ce signal optique, **caractérisé en ce que** ces moyens de modulation consistent en un modulateur d'amplitude et **en ce que** des moyens commandent ledit modulateur et/ou le laser de façon à ce qu'il(s) réalise(nt) simultanément une modulation d'amplitude et une modulation de phase synchrone.

2. Dispositif selon la revendication 1, **caractérisé en ce que** lesdits moyens de commande mettent en oeuvre une modulation de l'intensité de commande du laser.

3. Dispositif selon la revendication 1, **caractérisé en ce que** le modulateur est un modulateur de type Mach-Zender et **en ce que** les moyens de commande ne modulent qu'une seule des branches dudit modulateur de type Mach-Zender.

4. Dispositif selon l'une des revendications précédentes, **caractérisé en ce qu'**il émet des impulsions au format soliton.

5. Dispositif selon la revendication 4, **caractérisé en ce que** la durée des impulsions varie entre 30 et 55% du temps bit.

6. Système de transmission optique comportant des moyens d'émission, une ligne de transmission à fibre(s) optique(s), des moyens de réception, **caractérisé en ce que** les moyens d'émission sont des moyens selon l'une des revendications précédentes.

7. Dispositif de transmission optique terrestre, **caractérisé en ce qu'**il comprend un système selon la revendication précédente.

## Patentansprüche

1. Vorrichtung zum Senden von optischen Signalen im RZ-Format, die eine Quelle zum Senden eines kohärenten optischen Signals umfaßt, sowie Mittel zur Modulation dieses optischen Signals, **dadurch gekennzeichnet, daß** diese Modulationsmittel aus einem Amplitudenmodulator bestehen, und dadurch, daß Mittel diesen Modulator und/oder den Laser derart steuern, daß er(sie) gleichzeitig eine Amplitudenmodulation und eine synchrone Phasenmodulation realisiert(en).

2. Vorrichtung nach Anspruch 1, **dadurch gekennzeichnet, daß** die Steuerungsmittel eine Modulation der Steuerungsintensität des Lasers bewirken.

3. Vorrichtung nach Anspruch 1, **dadurch gekennzeichnet, daß** der Modulator ein Modulator vom Mach-Zehnder-Typ ist, und dadurch, daß die Steuerungsmittel nur einen einzigen der Zweige dieses Modulators vom Mach-Zehnder-Typ modulieren.

4. Vorrichtung nach einem der voranstehenden Ansprüche, **dadurch gekennzeichnet, daß** sie Impulse im Soliton-Format aussendet.

5. Vorrichtung nach Anspruch 4, **dadurch gekennzeichnet, daß** die Impulsdauer zwischen 30 und 55% der Einheitszeit bzw. Bit-Zeit variiert.

6. Optisches Übertragungssystem umfassend Sendemittel, eine Übertragungsleitung aus Lichtfaser(n) und Empfangsmittel, **dadurch gekennzeichnet, daß** die Sendemittel Mittel gemäß einem der voranstehenden Ansprüche sind.

7. Vorrichtung zur terrestrischen optischen Übertragung, **dadurch gekennzeichnet, daß** sie ein System gemäß dem voranstehenden Anspruch umfaßt.

## Claims

1. Device for transmitting optical signals in RZ format, comprising a source for transmitting a coherent optical signal and means for the modulation of this optical signal, **characterized in that** these modulation means consist of an amplitude modulator and **in that** means control the said modulator and/or the laser so that it/they carries/carry out simultaneously amplitude modulation and synchronous phase modulation.

2. Device according to Claim 1, **characterized in that** the said control means modulate the control intensity of the laser.

3. Device according to Claim 1, **characterized in that** the modulator is a Mach-Zender modulator and **in that** the control means modulate only one of the branches of the said Mach-Zender modulator.

4. Device according to one of the preceding claims, **characterized in that** it transmits pulses in soliton format.

5. Device according to Claim 4, **characterized in that** the duration of the pulses varies between 30 and 55% of the bit time.

6. Optical transmission system that includes transmission means, a fibre-optic transmission line and receiving means, **characterized in that** the transmission means are means according to one of the preceding claims.

7. Terrestrial optical transmission device, **characterized in that** it includes a system according to the preceding claim.
